# EUROPÄISCHE PATENTSCHRIFT

(11) **EP 1 388 682 B1**
(45) Veröffentlichungstag und Bekanntmachung des Hinweises auf die Patenterteilung: **08.02.2006**
(21) Anmeldenummer: 03016762.1
(22) Anmeldetag: 23.07.2003
(51) Int. Cl.: F16D 23/12, F16D 27/00, F16D 27/14

(54) **Drehmomentübertragungsvorrichtung in einem Kraftfahrzeug**
Torque transmission device in a vehicle
Dispositif de transmission de couple dans un automobile

(30) Priorität: 06.08.2002 DE 10235906
(43) Veröffentlichungstag der Anmeldung: 11.02.2004
(73) Patentinhaber: ZF Sachs AG, 97424 Schweinfurt (DE)
(72) Erfinder: Kuhstrebe, Jochen, Dipl.-Phys., 97318 Westheim (DE)

(56) Entgegenhaltungen:
- GB-A- 2 347 723
- US-A- 4 945 780
- US-A1- 2001 047 919

## Beschreibung

Die Erfindung bezieht sich auf eine Drehmomentübertragungsvorrichtung in einem Kraftfahrzeug, welche wenigstens eine Kupplungseinrichtung, welche wenigstens eine Betätigungsvorrichtung, sowie wenigstens eine Antriebseinrichtung aufweist.

Solche Drehmomentübertragungsvorrichtungen sind bereits aus Kraftfahrzeugen mit automatisierten Antriebsstrang bekannt. In derartigen Antriebssträngen wird eine Kupplungseinrichtung automatisch betätigt. Es ist bekannt, solche Kupplungseinrichtungen mittels einer Steuereinheit anzusteuern und mittels hydraulischen, elektromechanischen, pneumatischen oder sonstigen Aktuatoren zu betätigen. Schaltvorgänge in einem solchen System werden entweder von einer Steuerung selbst initiiert und durchgeführt, oder können vom Fahrer selbst mittels eines Schalthebels oder auch Schaltwippen am Lenkrad ausgelöst werden. Die Kupplung wird zum Gangwechsel automatisiert ausgerückt, die Getriebeübersetzung in den Zielgang gewechselt und anschließend die Kupplung wieder eingerückt, bei herkömmlichen, sogenannten "normally closed" Systemen, wird die Kupplung durch einen Energiespeicher, meist eine Membranfeder, eingerückt gehalten und wird mittels eines Aktuators ausgerückt. Dazu wird im Falle eines elektromechanischen Aktuators der Elektromotor aktiviert, welcher über eine Ausrückeinrichtung entgegen der Kraft des Energiespeicher arbeitet und die Kupplung somit ausrückt. Um die Ausrückkräfte mittels kleiner und damit dynamischer Elektromotoren aufzubringen, ist dem Elektromotor ein Getriebe nachgeschaltet, welches über ein Ausrücklager die Ausrückkraft auf die drehende Membranfeder überträgt.
Es sind aber auch sogenannte "normally opened" Systeme bekannt, bei denen die Kupplungseinrichtung im nicht betätigtem Zustand ausgerückt ist. Hierbei wird die Membranfeder durch einen Einrückhebel ersetzt und zum Beispiel eine sogenannte Tangentialblattfeder wirkt derart, dass sie in einem nicht betätigtem Zustand der Kupplungseinrichtung diese ausrückt und ausgerückt hält. Bei solchen Systemen muss im Gegensatz zu "normally closed" Systemen die Kupplung aktiv eingerückt werden. Ein solches "normally opened" System ist beispielsweise aus der DE 101 01 598 A1 bekannt. Dieses System besteht aus einer Antriebseinrichtung welche mittels einer Betätigungsvorrichtung eine Kupplungseinrichtung aktiv einrückt. Nachteilig bei solchen Systemen ist die im Gegensatz zu "normally closed" Systemen weitaus größere Belastung des Einrücklagers und der Antriebseinrichtung. Während bei "normally closed" , Systemen der Elektromotor und das Ausrücklager hauptsächlich beim Anfahren und Schalten belastet werden, muss im Fahrbetrieb des Kraftfahrzeugs mit geschlossener Kupplung bei "normally opened" Systemen die Antriebseinrichtung die Kupplungseinrichtung mittels der Betätigungsvorrichtung aktiv geschlossen halten. Dies führt bei Verwendung von herkömmlichen Ausrücklagern innerhalb kürzester Zeit zum Ausfall derselben. Zudem wird auch der Elektromotor stark thermisch belastet, da er zur Übertragung der Einrückkraft bestromt bleiben muss, jedoch keine Arbeit verrichtet. Diese Nachteile des "normally opened" Systems gegenüber dem "normally closed" System sind zwar durch Verwendung von zum Beispiel keramischen Lagern und durch Einbau einer selbsthemmenden Betätigungsvorrichtung oder eines selbsthemmenden Motors minimierbar, stellen jedoch keine optimale Lösung des Problems dar.
Außerdem sind aus der DE 32 26 628 C2 Drehmomentübertragungseinrichtungen bekannt, die eine Betätigungsvorrichtung für eine Kupplungseinrichtung beschreiben, welche aus einer Doppelkupplung, einem . Ausrückhebelsystem für jede Kupplung, Sperrmittel und einer Transportvorrichtung besteht. Nachteilig bei dieser Konstruktion ist die Platzierung des Arretiermechanismus als statisches getriebeseitiges Bauteil. Die Sperrmittel stützen sich am Getriebegehäuse ab und das Ausrücklager befindet sich dadurch zwischen den Ausrückhebeln und den Sperrmitteln. Demzufolge ist in einem arretierten Zustand der ausgerückten Kupplung das Ausrücklager stark belastet.
Weiterhin sind Kupplungssysteme bekannt, z.Bsp. US 2001047919, welche mittels eines elektromotorischen Aktuators über einen Kugel-Rampen-Mechanismus betätigt werden können. Der Kugel-Rampen Mechanismus drückt über ein Einrücklager auf eine Anpressplatte, welche das Lamellenpaket der Kupplungseinrichtung zusammendrückt. Über einen separaten Elektromagneten kann ein Sperrbolzen die kupplungsseitige Rampe des Kugel-Rampen Mechanismus gegen ein Verdrehen sichern und somit die Kupplungseinrichtung im eingerücktem Zustand arretieren. Eine weitere Möglichlichkeit der Arretierung von Kupplungssystemen des "normally closed"-Typs besteht darin, eine drehbare Steuerscheibe neben üblichen Rampen zum Betätigen der Kupplungseinrichtung mit Rastierstellungen auszugestalten, welche zum Arretieren der Betätigungsvorrichtung dienen (z. Bsp. US 4945780).Weiterhin sind Kupplungseinrichtung bekannt (z.Bsp. GB 2347723), welche mittels eines elktromotorischen Aktuators betätigt werden wobei, zur Unterstützung des Aktuators ein mit diesem wirkverbundener Kraftspeicher vorgesehen ist. Zur Entlastung des Aktuators bei eingerückter Kupplungseinrichtung ist hierbei ein Arretiermechanismus vorgesehen, welcher zwischen Aktuator und Einrücklager angeordnet ist. Bei eingerückter und arretierter Kupplungseinrichtung stützt sich die Anpresskraft über das Einrücklager am nicht rotierenden Arretiermechanismus ab.

Hiervon ausgehend ist es Aufgabe der Erfindung bei automatisierten "normally opened" Systemen, das heißt, die Betätigungseinrichtung beaufschlagt während des Betriebs im eingerückten Zustand die Kupplung, unverhältnismäßig hohe Belastungen des Lagers und der Antriebseinrichtung zu vermeiden.

Diese Aufgabe wird erfindungsgemäß dadurch gelöst, dass die Betätigungsvorrichtung mit einem Arretiermechanismus versehen ist, mittels welchem die Drehmomentübertragungsvorrichtung im eingerücktem Zustand arretiert werden kann. Nach der Erfindung ist der Arretiermechanismus primärseitig und rotatorisch, mit dem rotierenden Kupplungsgehaüse verbunden, angeordnet.
Es ist vorteilhaft den Arretiermechanismus mit dem mit Motordrehzahll rotierenden Kupplungsgehäuse dermaßen zu verbinden, dass sich im arretierten Zustand der Einrückhebel mittels des Arretiermechanismus am Kupplungsgehäuse selbst abstützt und somit ein geschlossener Kraftfluss innerhalb des Kupplungsgehäuses gegeben ist. Besonders bevorzugt ist eine zwei-, oder mehrteilig Ausbildung des Arretiermechanismus, welche vorzugsweise aus einem Einrückelement und einem Sperrelement besteht. Im eingerückten arretierten Zustand der Kupplungseinrichtung wird ein Teil des vom Fahrzeugmotor eingeleiteten Motormoments über das Kupplungsgehäuse, das Sperrelement, das Einrückelement, den Einrückhebel und die Anpressplatte auf die Kupplungsscheibe übertragen. Hierbei stützt sich das Einrückelement axial am Sperrelement und dieses wiederum am Kupplungsgehäuse ab. Durch diesen Drehmomentenfluss wird im arretierten Zustand der Betätigungsvorrichtung keine unerwünschte Axialkraft auf die Kurbelwellenlagerung übertragen. Erfindungsgemäß werden im nicht arretierten Zustand über das Sperrelement keine Einrückkräfte übertragen, sondern die Einrückkraft wirkt über das Einrücklager auf das Einrückelement direkt auf den Einrückhebel. Eine Verdrehung des Sperrelements in eine Arretierposition oder eine Nicht-Arretierposition erfolgt also quasi kräftefrei. Im arretierten Zustand der Drehmomentübertragungseinrichtung kann also die über die Antriebseinrichtung auf die Betätigungsvorrichtung übertragene Einrückkraft drastisch reduziert werden, ohne dass die Drehmomentübertragungsfähigkeit der Kupplungseinrichtung sinkt. Dadurch kann zum Beispiel ein Elektromotor der Antriebseinrichtung stromlos geschalten werden, wodurch sich die Antriebseinrichtung und die damit verbundene Betätigungsvorrichtung entspannt. Vorteilhaft ist, wenn die Drehmomentübertragungsfähigkeit der arretierten Kupplungseinrichtung oberhalb eines möglichen Drehmomentes des Antriebmotors liegt, damit die Kupplungseinrichtung sicher im Haftreibungsbereich betrieben wird. Zum Betreiben des Arretiermechanismus sind erfindungsgemäß erste und zweite Wirkmittel mit dem Einrückelement und dem Sperrelement verbunden welche derart wechselwirken, dass das Sperrelement durch axiales Verschieben des Einrückelements verdreht wird. Vorteilhafterweise treten die Wirkmittel erst in einem zweiten Bereich des Einrückweges des Einrücketements in Wirkverbindung, sodass in einem ersten Bereich des Einrückens ein problemloses Regeln des Kupplungsmomentes gewährleistet ist. Damit ist sichergestellt, dass zum Beispiel während eines Anfahrens oder während eines Betriebes der Kupplungseinrichtung an der Haftreibungsgrenze kein versehentliches Arretieren der Drehmomentübertragungseinrichtung erfolgt. Erfindungsgemäß treten die Wirkmittel erst in einem Einrückbereich in Wirkverbindung, in welchem die Kupplungseinrichtung bereits im Haftreibungsbereich arbeitet. Zur Vorbereitung des Arretierens wird der vorzugsweise elastisch ausgebildete Einrückhebel weiter eingerückt, wodurch das Sperrelement relativ zum Einrückelement verdreht wird. Bei einem anschließenden Verschieben des Einrückelements in Ausrückrichtung wird das Sperrelement weiterverdreht und somit relativ zum Einrückelement in eine Arretierposition gebracht in welcher sich das Einrückelement beim weiterer Ausrückbewegung am Sperrelement abstützt. In Vorbereitung eines Gangwechsels wird zum Ausrücken der Kupplungseinrichtung das Einrückelement wieder gegen den Einrückhebel in Einrückrichtung verschoben, bis das Sperrelement durch das Einrückelement weitergedreht wird. Anschließend kann das Einrückelement ausgerückt werden, wodurch das Sperrelement in eine Nicht-Arretierposition weitergedreht wird und dem
Einrückelement den Ausrückweg freigibt. Die Ausrückbewegung des Einrückelements wird durch den elastisch ausgebildeten Einrückhebel bewirkt. Die Kupplungseinrichtung kann durch eine Belagfederung der Kupplungsscheibe und einer Tangentialblattfeder oder ähnlichen Kraftspeichern zwischen Anpressplatte und Kupplungsgehäuse gelüftet werden. Um ein sogenanntes Leerlaufen des Einrücklagers im arretierten Zustand zu vermeiden, ist vorzugsweise zwischen dem Einrückelement und Einrücklager vorzugsweise eine Blattfeder vorgesehen welche auf das Einrücklager bei entlasteter Antriebseinrichtung eine Mindestlast aufbringt. Idealerweise ist zwischen Anpressplatte und Kupplungsgehäuse ein Verschleißausgleichsmechanismus vorgesehen, welcher den Verschleiß der Kupplungsscheibe ausgleicht. Damit ist sichergestellt, dass in arretierter Einrückstellung die Kupplungseinrichtung auch bei verschlissener Kupplungsscheibe, und damit geringerer axialer Dicke, im Haftreibungsbereich betrieben wird. Die Funktionalität des Arretiermechanismus ist auch bei einer andersartiger Platzierung gewährleistet. So kann der Arretiermechanismus zum Beispiel auch im Einrückhebel, im Einrückelement oder zwischen Einrückelement und Einrückhebel realisiert werden. Um eine möglichst einfache und effektive Ansteuerung der Kupplungseinrichtung zu ermöglichen, ist es vorteilhaft, die Antriebseinrichtung derart anzusteuern, dass sie in einem ersten Betriebszustand ein Einrücken und Arretieren der Kupplungseinrichtung bewirkt, und in einem zweiten Betriebszustand ein Lösen der Arretierung und ein Ausrücken der Kupplungseinrichtung. Dazu ist erfindungsgemäß vorgesehen, dass ein Stößel der Betätigungsvorrichtung bei Verschiebung des Einrückelements innerhalb des zweiten Einrückbereiches seinen Totpunkt durchläuft und damit eine Umkehrung seiner axialen Verschiebungsrichtung und der des Einrückelements bewirkt, ohne dass der Betriebszustand der Antriebseinrichtung geändert werden muss. Der Erfinder hat weiterhin erkannt, dass eine nicht konstante Übersetzung der Betätigungsvorrichtung die Dynamik der Kupplungseinrichtung erhöht, da mit steigender Drehmomentübertragungsfähigkeit der Kupplungseinrichtung die Anpresskraft der Anpressplatte erhöht werden muss. Die größte Übersetzung der Betätigungsvorrichtung wirkt im Bereich des Totpunktes des Stößels auf das Einrückelement, wobei dieses dann bereits im zweiten Bereich des Einrückweges auf das Sperrelement wirkt. Die Betätigungsvorrichtung ist dermaßen konstruiert, dass die größte Übersetzung, dann vorliegt, wenn der Einrückhebel maximal verschoben, bzw. eingerückt ist. In diesem Bereich maximal erforderlicher Einrückkraft findet auch die Umkehrung der Verschieberichtung des Einrückelements statt, die zur Arretierung, bzw. zum Lösen der Arretierung notwendig ist. Der Erfinder hat erkannt, das mit einer entsprechenden Konstruktion der Betätigungsvorrichtung sowohl eine nichtkonstante Übersetzung mit maximaler Kraft am Totpunkt als auch eine Invertierung der Einrückrichtung kombiniert werden kann. Somit können bauraumkleine und hochdynamisch elektromechanische Antriebssysteme realisiert werden, die zudem eine einfache Ansteuerung der Antriebseinheit erlauben. Gerade zum dynamische Regeln der Kupplungseinrichtung sind drehmomentschwächere Elektromotoren mit kleinerem Trägheitsmoment besonders vorteilhaft. Durch das geschickte Durchfahren des Totpunktes zur Invertierung der Einrückrichtung kann ein Elektromotor der Antriebseinrichtung seinen Betrieb aufrechterhalten und muss nicht gegen eine anliegende Last anlaufen, wie dies erforderlich wäre, wenn der Elektromotor mittels Drehrichtungsumkehr die Einrückrichtung des Einrückelements ändern würde.

Bevorzugte Ausführungsbeispiele sind in den Figuren 1 bis 10 dargestellt.
Es zeigt:
Figur 1 eine automatisierte Kupplungseinrichtung im ausgerückten Zustand.
Figur 2 eine automatisierte Kupplungseinrichtung im arretierten Zustand.
Figur 3 eine alternative automatisierte Kupplungseinrichtung im arretierten Zustand.
Figur 4 ein erfindungsgemäßes Einrückelement
Figur 5 eine Teilansicht eines erfindungsgemäßen Sperrelements
Figur 6a - 6h die Funktionsweise des Arretiermechanismus.
Figur 7a, 7b alternative Ausgestaltungen des Arretiermechanismus.

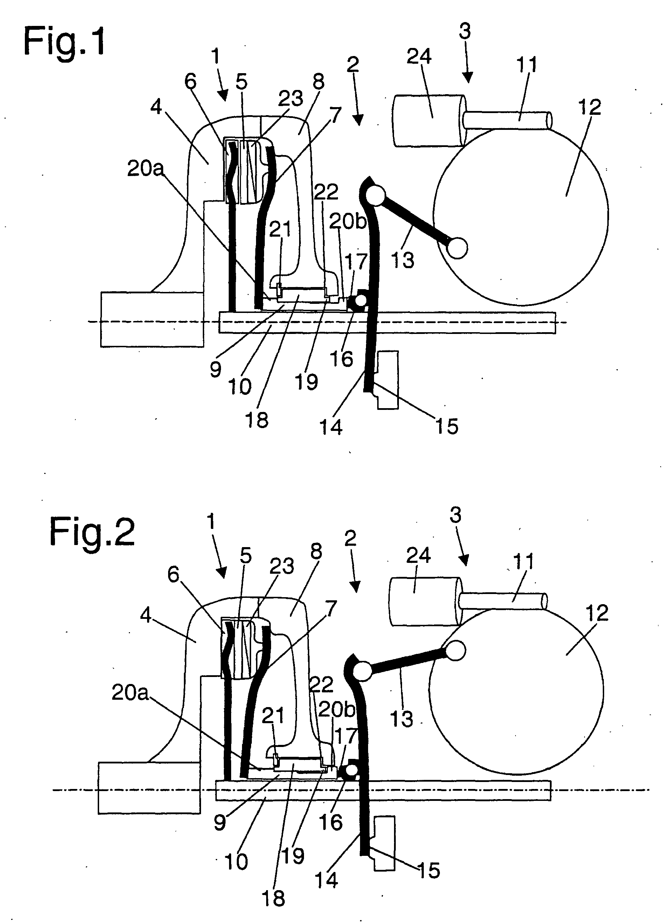

Aus der Figur 1 sind im wesentlichen die automatisierte Kupplungseinrichtung 1, die Betätigungsvorrichtung 2 und die Antriebseinrichtung 3 zu entnehmen. Die Kupplungseinrichtung 1 besteht im Wesentlichen aus der Druckplatte 4, der Anpressplatte 5 und der Kupplungsscheibe 6. Die Anpressplatte 5 drückt mittels des Einrückhebels 7 die Kupplungsscheibe 6 gegen die Druckplatte 4. Der Einrückhebel 7 stützt sich an seinem radial äußeren Umfang am Kupplungsgehäuse 8 ab und liegt mit seinem radial inneren Umfang am ringförmigen Einrückelement 9 an. Das Einrückelement 9 ist axial verschiebbar auf der Getriebeeingangswelle 10 gelagert. Die Betätigungsvorrichtung 2 besteht im wesentlichen aus einem von einer Schnecke 11 und einem Schneckenrad 12 gebildeten Getriebe. Mit dem Schneckenrad 12 ist ein Ende eines Stößels 13 drehbar verbunden. Das andere Ende des Stößels greift an einem Ende einer schwenkbar gelagerten Einrückwippe 14 der Betätigungsvorrichtung 2 an. Die andere Seite der Einrückwippe stützt sich drehbar an einem Drehpunkt 15 des Getriebegehäuses ab. Die Einrückwippe wirkt in ihrem zwischen ihren beiden Enden auf ein Einrücklager 16. Zwischen dem Einrücklager 16 und dem Einrückelement 9 befindet sich eine Ringfeder 17, die im arretierten Zustand das Einrücklager mit einer Mindestlast beaufschlagt. Radial um das Einrückelement 9 ist das Sperrelement 18 angeordnet, wobei radial innenliegende Wirkmittel 19 des Sperrelements 18 und radial außenliegende Wirkmittel 20a, 20b des Einrückelements 9, sich in einem gleichen Radialbereich befinden. Das Sperrelement 18 ist durch einen Sicherungsring 21 in einer Führungsnut 22 des Kupplungsgehäuses 8 axial fest, aber drehbar gelagert.

Abbildung 2 zeigt prinzipiell die Drehmomentübertragungsvorrichtung aus Abbildung 1, jedoch in einem arretierten Zustand der Kupplungseinrichtung 1.
Der Stößel 13 hat durch Drehung des Schneckenrades 12 seinen Totpunkt durchfahren und dadurch mittels des Einrückelements 9 das Sperrelement 18 in eine Arretierposition gebracht. Wirkmittel 20a des Einrückelements 9 stützen sich axial an den Wirkmitteln 19 des Sperrelements 18 ab, und dieses sich wiederum an der Flanke der Führungsnut 22 am Kupplungsgehäuse 8. Damit ist in der arretierten Kupplungsposition über das Kupplungsgehäuse 8, dem Einrückhebel 7 dem Einrückelement 8 und dem Sperrelement 18 ein kupplungsinterner geschlossener Kraftfluss realisiert.

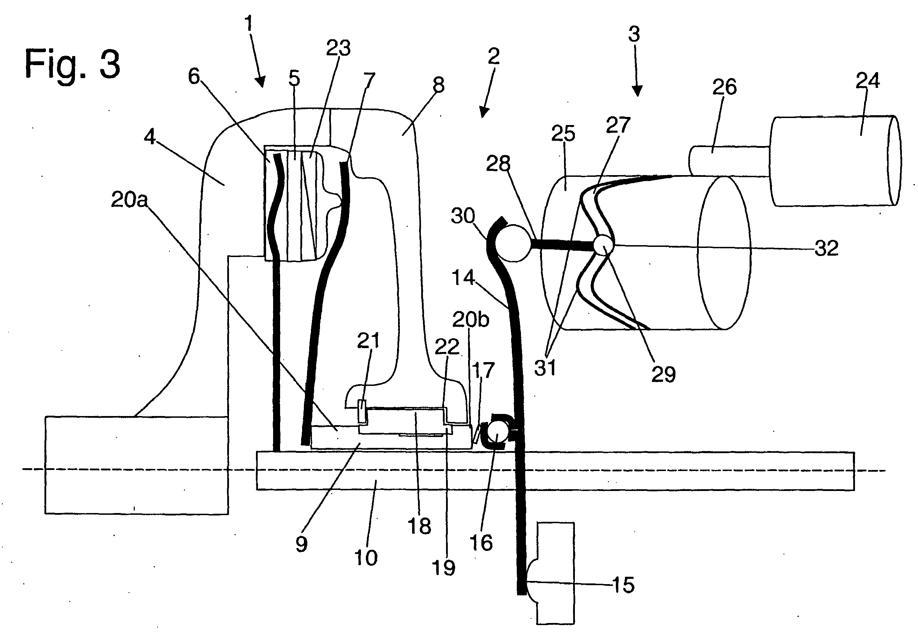

In Figur 3 ist eine alternative Betätigungsvorrichtung symbolhaft dargestellt. Dabei treibt ein Elektromotor 24 eine Einrückwalze 25 an. Eine Abtriebswelle 26 des Elektromotors 24 greift am Außenumfang der Einrückwalze 25 an, um diese rotatorisch um Ihre Längsachse zu drehen. Dieser Antrieb der Walze steht stellvertretend für eine Vielzahl, dem Fachmann bekannte Möglichkeiten, mittels eines Elektromotors eine Walze zu betreiben. So kann zum Beispiel die Abtriebswelle 26 des Elektromotors 24 auch an einer Verzahnung am Innenumfang der Einrückwalze angreifen, oder der Elektromotor kann direkt mit der Drehachse der Einrückwalze verbunden sein. Auch sind bauraumoptimierte Ausgestaltungen eines Antriebs mit in den Offenbarungsgehalt der Anmeldung mit einbezogen, in welchen der elektrische Antrieb zum Beispiel im Inneren der Einrückwalze integriert ist. Solche Walzen sind dem Fachmann als Schaltwalzen in automatisierten sequentiellen Schaltgetrieben bekannt. Am Außenumfang solcher Schaltwalzen verlaufen Schaltnuten, in welche Schaltstangen eingreifen, die durch Drehung der Schaltwalze axial verschoben werden.

In Figur 3 ist auf dem Umfang der Einrückwalze 25 eine Nut 27 angebracht in welche ein Stößel 28 mittels eines an seinem Ende angebrachten Eingriffsmittel 29 eingreift. Der Stößel 28 ist bezogen auf die Drehachse der Einrückwalze 25 nicht rotatorisch, aber axial verschiebbar gelagert. Damit bewirkt eine Drehung der Einrückwalze 25 ein Gleiten des Eingriffsmittels 29 in der Nut 27 und damit ein axiales Verschieben des Stößels 28. Das andere Ende des Stößels 28 greift in eine Stößelaufnahmevorrichtung 30 der Einrückwippe 14 ein. Die Erfindung beschränkt sich nicht auf die Führung eines einzelnen Eingriffsmittel 29 in einer am Außenumfang der Einrückwalze 25 angebrachten Nut 27, sondern umfasst auch mehrere Eingriffsmittel 29 die an dem Stößel angebracht sein können, sowie eine am Innenumfang der Einrückwalze 25 angebrachte Nut. Bezüglich der Axialbelastung der Einrückwalze 25 ist es vorteilhaft, mehrere am Umfang symmetrisch verteilte Eingriffsmittel 29 in der Nut 27 zu führen, damit beim Betätigen der Kupplungseinrichtung durch den Druck des Einrückhebels 7 kein Drehmoment auf die Einrückwalze 25 aufgebracht wird. Dazu ist es erforderlich, die Kurvenbahn der Nut 27 sich periodisch wiederholend auszuführen, damit die Eingriffsmittel 29 axial synchron verschoben werden. Eine beispielhafte Ausführungsform ist eine Anordnung des Stößels 13 auf der Drehachse der Einrückwalze 25 welche eine am Innenumfang angeordnete Nut 27 trägt, die in sich geschlossen ist und sich jeweils nach 120 Grad wiederholt. Am Ende des Stößels sind dazu drei sich nach radial außen erstreckende Eingriffsmittel 29 symmetrisch im Winkel von 1 20 Grad angeordnet, die in die Nut eingreifen. Die Gegenkraft des Einrückhebels 7 wirkt damit direkt in Richtung der Drehachse der Einrückwalze 25. Neben der Drehrichtung des Elektromotors 24 bestimmt hauptsächlich der Verlauf der Kurvenbahn der Nut 27 die Einrückrichtung und das Einrückverhalten des Einrückelements 9. Damit zum Einrücken und Arretieren der Kupplungseinrichtung der Elektromotor seine Drehrichtung beibehalten kann, ist die Kurvenbahn in Figur 3 dergestalt ausgeformt, dass sie bezüglich des Abstandes zum Kupplungsgehäuse ein oder mehrere Minima aufweist, bei deren Durchgleiten durch die Eingriffsmittels der Stößel seine Verschiebungsrichtung umkehrt. In der speziellen Ausgestaltung der Kurvenbahn in Figur 3 schließt liegt zwischen 2 Minima 31 ein lokales Maximum 32. Beim Durchfahren des ersten Minimums verdreht das Einrückelement mittels der Wirkmittel 20b das Sperrelement und beim Weiterdrehen in das lokale Maxima verdrehen die Wirkmittel 20a das Sperrelement 18 weiter in die Arretierposition, sodass beim Erreichen des lokalen Maximas 32 die Kupplungseinrichtung 1 arretiert ist und der Elektromotor 24 und das Einrücklager 16 entlastet sind. Beim Weiterdrehen der Einrückwalze 25 in selber Drehrichtung wird das zweite Minima durchfahren und damit das Sperrelement weiter in eine Nicht Arretierposition gedreht, sodass beim Weiterdrehen der Einrückwalze 25 die Kupplungseinrichtung 1 ausgerückt wird. In dieser speziellen Ausgestaltung einer in sich geschlossenen Kurvenbahn, ist die Drehrichtung des Elektromotors 24 unabhängig wählbar. Dieser kann beim Einrücken, Arretieren und anschließendem Wiederausrücken der Kupplungseinrichtung 1 seine Drehrichtung beibehalten, oder zum Entsperren und Ausrücken invertieren. Generell kann durch die Beibehaltung einer Drehrichtung das Einrück- und Ausrückverhalten der Kupplungseinrichtung 1 unabhängig voneinander optimiert werden, da unterschiedliche Bereiche der Kurvenbahn zum Ein- und Ausrücken durchfahren werden. Durch die Verwendung eines lokalen Maximas in der Kurvenbahn einer Einrückwalze kann prinzipiell eine Kupplungseinrichtung eines normally opened Systems auch ohne Verwendung eines Arretiermechanismus stromlos in eingerücktem Systems gehalten werden, jedoch mit der Einschränkung, dass zwar ein Elektromotor eines Aktuators entlastet wird, jedoch nicht das Einrücklager.

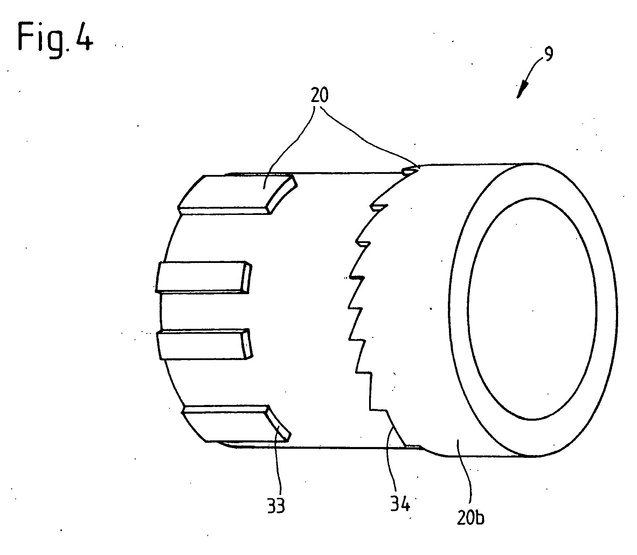

In Fig. 4 ist ein erfindungsgemäßes Einrückelement 9 detailliert dargestellt. Das Einrückelement 9 ist im Wesentlichen hülsenförmig ausgebildet, wobei seine innere Oberfläche glatt ist und es auf seiner äußeren Oberfläche Wirkmittel 20a, 20b trägt. Die Wirkmittel 20a, 20b sind als sich nach radial außen erstreckende Keile ausgebildet. Es befinden sich im Wesentlichen zwei unterschiedliche Wirkmittel 20a, 20b auf dem Einrückelement 9. Die Wirkmittel 20a bestehen aus einer Vielzahl identischer keilförmiger Erhebungen, welche radial symmetrisch am linken Rand des Einrückelementes 9 angebracht sind. Die einzelnen Wirkmittel 20a sind zueinander distanziert angebracht, sodass zwischen ihnen eine Art Durchgangsnut entsteht, welche in etwa die Breite der Wirkmittel 20a hat. Die Wirkmittel 20a schließen mit ihrem linken Rand bündig mit dem Einrückelement 9 ab. Die axial rechte Seite der Wirkmittel 20a ist jeweils als Schräge 33 ausgebildet. Hierbei verläuft die axial rechte Stirnseite der Wirkmittel 20a schräg zur Umfangsrichtung des Einrückelementes 9. Infolgedessen besitzt jedes Wirkmittel 20a eine längere und eine kürzere axial verlaufende Seite, welche sich in Richtung Mitte des Einrückelementes 9 erstreckt. Dem Wirkmittel 20a liegt auf der anderen Seite des Einrückelementes 9 das Wirkmittel 20b gegenüber. Zwischen den beiden Wirkmitteln 20a, 20b liegt ein wirkmittelfreier Bereich, in welchem das Einrückelement 9 in Umfangsrichtung keine Erhebungen aufweist. Das Wirkmittel 20b ist im Gegensatz zu den Wirkmittein 20a einstückig ausgebildet und ist auf seiner axial innen gelegenen Seite zackig, bzw. keilförmig, ausgebildet. Hierbei entspricht die Anzahl der Zacken des Wirkmittels 20b der doppelten Anzahl der Wirkmittel 20a. Die Breite einer Zacke des Wirkmittels 20b entspricht der Breite eines Wirkmittels 20a. Die Schrägen 34 der einzelnen Zacken des Wirkmittels 20b verlaufen gegenüber den Schrägen 33 der Wirkmittel 20a gegenläufig. Zudem sind die Wirkmittel 20a gegenüber dem Wirkmittel 20b so gegeneinander verdreht, dass die Zacken des Wirkmittels 20b den Schrägen 33 der Wirkmittel 20a in etwa mittig gegenüberliegen.

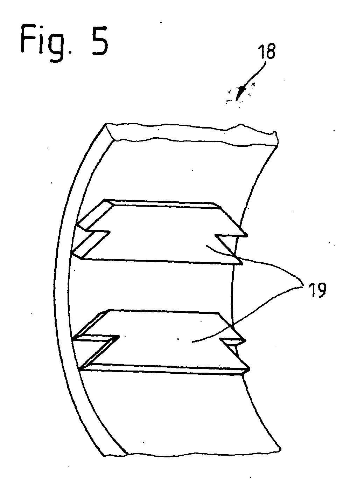

In Fig. 5 ist eine Teilansicht des hülsenförmigen Sperrelementes 18 dargestellt. Auf der Innenseite des Sperrelementes 18 befinden sich identisch ausgestaltete Wirkmittel 19. Die Wirkmittel 19 erheben sich von der Innenfläche des Sperrelementes 18 nach radial innen. Zwischen den einzelnen Wirkmitteln 19 befinden sich Bereiche mit radialem, größeren Durchmesser. Diese Bereiche erstrecken sich über die gesamte Länge des Sperrelementes 18. Die Wirkmittel 19 sind als beidseitig gezahnte, massive Erhebungen ausgestaltet. Die axialen Flanken der Wirkmittel 19 sind mit jeweils zwei Zähnen in Sägezahngestalt ausgestattet. Die Steigung der Sägezähne entspricht den Schrägen 33, 34 der Wirkmittel 20a, 20b des Einrückelementes 9. Der Abstand zwischen den einzelnen Wirkmittein 19 ist etwas größer gestaltet als die Breite der Wirkmittel 20a des Einrückelementes 9.

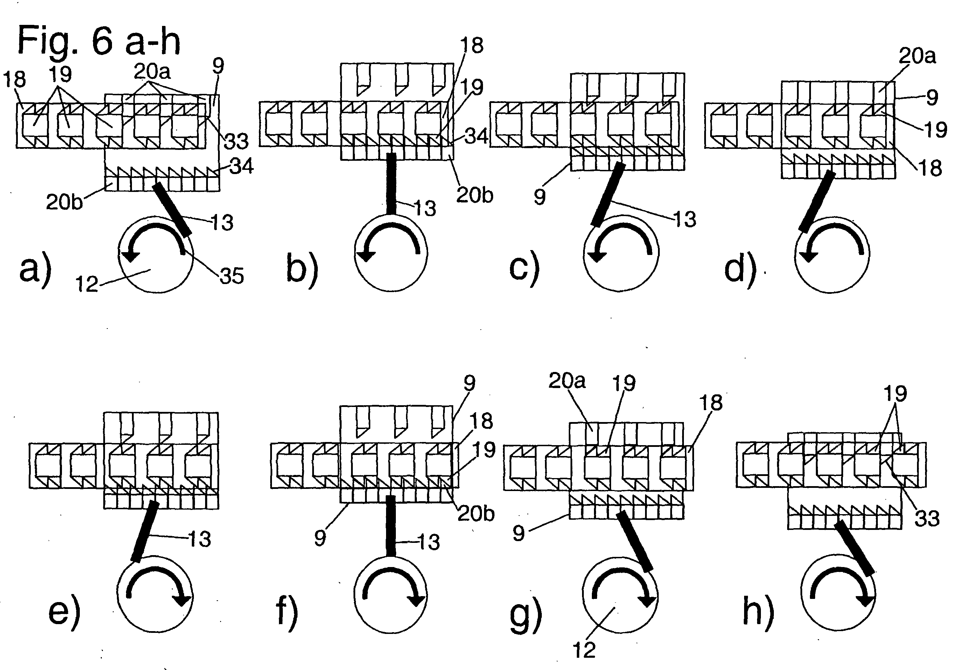

In Fig. 6a- 6h ist die Funktionsweise des erfindungsgemäßen Arretiermechanismus dargestellt. Hierzu sind das Schneckenrad 12, der Stößel 13 sowie das Einrückelement 9 und das Sperrelement 18 symbolhaft dargestellt. Das Einrückelement 9 und das Sperrelement 18 sind in eine zweidimensionale Darstellung projiziert. Die jeweiligen Pfeile auf dem Schneckenrad 12 geben die Drehrichtung 35 dieses an. In den Figuren 6a, 6b, 6c, 6d ist ein Einrückvorgang einer Kupplung mit anschließender Arretierung dargestellt. In den Figuren 6e, 6f, 6g, 6h ist das Lösen aus der arretierten Position mit anschließendem Ausrücken der Kupplung dargestellt. Zum Einrücken und Arretieren der Kupplung wird das Schneckenrad 12 gegen den Uhrzeigersinn gedreht. In Fig. 6a befinden sich die Wirkmittel 20a des Einrückelementes 9 zwischen den Wirkmitteln 19 des Sperrelementes 18. Durch Drehung des Schneckenrades 12 wird das Einrückelement 9 mittels des Stößels 13 nach oben geschoben. Der Stößel 13 wandert dabei in Richtung seiner Totpunktlage und die Wirkmittel 20b gelangen mit den Wirkmitteln 19 in Eingriff. Dadurch wird das Sperrelement 18 nach rechts geschoben bis die Wirkmittel 20b mit den ihnen zugewandten Zähnen der Wirkmittel 19 eine Art Formschluss bilden. Hierbei rutschen die Schrägen 34 genau in die Zähne der Wirkmittel 19 (Fig.6b). Bei weiterer Verdrehung des Schneckenrades 12 wird der Stößel 13 aus seiner Totpunktlage herausbewegt, was ein Zurückziehen des Einrückelementes 9 bewirkt (Fig.6c). Bei Weiterdrehen des Schneckenrades 12 gelangen die Wirkmittel 20a des Einrückelementes 9 in Wirkverbindung mit den Wirkmitteln 19 des Sperrelementes 18. Hierbei wird das Sperrelement 18 ein Stück weitergedreht, was in der Zeichnung einer Verschiebung nach rechts entspricht, bis die Wirkmittel 20a sich formschlüssig in den Zähnen der Wirkmittel 19 des Sperrelementes 18 abstützen können (Fig.6d), Zum Lösen der Arretierung und zum Ausrücken der hier nicht dargestellten Kupplung wird das Schneckenrad 12 im Uhrzeigersinn gedreht, was in den Figuren 6e bis 6h dargestellt ist. Hierbei durchläuft der Stößel 13 wieder seine Totpunktlage, was eine Richtungsumkehr des Einrückelementes 9 bewirkt (Fig. 6f). Beim Lösen der Arretierung treten zuerst die Wirkmittel 20b des Einrückelementes 9 mit dem Wirkmittel 19 des Sperrelementes 18 in Verbindung, wobei sich das Sperrelement 18 ein Stück weiter nach rechts verschiebt, da es axial fixiert ist (Fig. 6f). Bei weiterem Drehen des Schneckenrades 12 im Uhrzeigersinn wird das Einrückelement 9 wieder in Richtung Ausrücken zurückgezogen, wobei die Wirkmittel 20a wieder in Wirkverbindung mit den Wirkmitteln 19 des Sperrelementes 18 treten (Fig.6g). Das Sperrelement 18 wird jetzt weiter in eine Freigabestellung nach rechts geschoben. Die Wirkmittel 20a des Einrückelementes 9 stützen sich jetzt nicht mehr an den Wirkmitteln 19 des Sperrelementes 18 ab, sondern schieben das Sperrelement 18 durch ihre Schrägen 33 so weit nach rechts, dass sie in die Zwischenräume der Wirkmittel 19, welche nutförmig ausgebildet sind, rutschen (Fig. 6h).

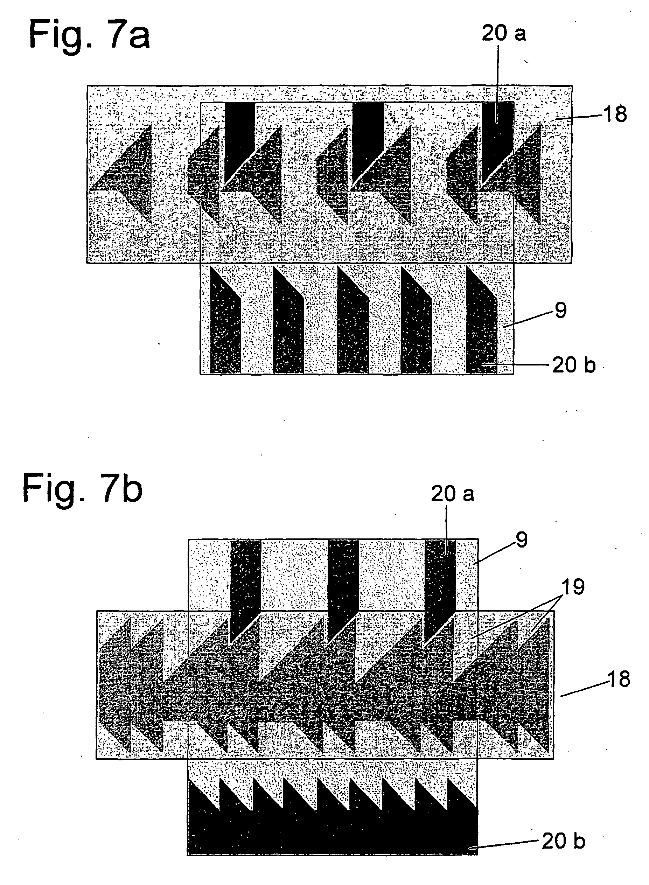

In den Fig. 7a, 7b sind alternative Ausgestaltungen des Arretiermechanismus dargestellt. Hierbei sind speziell die Wirkmittel 19, 20a, 20b in alternativer Weise ausgestaltet. In Fig. 7a sind die Wirkmittel 20b des Einrückelementes 9 nicht mehr als ein Teil ausgebildet, sondern als eine Vielzahl von Wirkmitteln 20b, wobei sich die Anzahl der Zähne halbiert hat. In Fig. 7b sind die Wirkmittel 19 des Sperrelementes 18 nicht mehr distanziert voneinander angebracht. Vielmehr sind die Wirkmittel 19 als Nuten auf der Innenseite des hülsenartigen Sperrelementes 18 ausgebildet. Um das Einrückelement 9 am Sperrelement 18 abstützten zu können und auch wieder lösen zu können, ist das Wirkmittel 19 des Sperrelementes 18 mit verschieden langen Nuten ausgestaltet. Die Darstellungen der Fig. 7a, 7b sind der Einfachheit halber wie Fig. 6 ins Zweidimensionale projiziert.

### Bezugszeichenliste

- Kupplungseinrichtung: 1
- Betätigungsvorrichtung: 2
- Antriebseinrichtung: 3
- Druckplatte: 4
- Anpressplatte: 5
- Kupplungsscheibe: 6
- Einrückhebels: 7
- Kupplungsgehäuse: 8
- Einrückelement: 9
- Getriebeeingangswelle: 10
- Schnecke: 11
- Schneckenrad: 12
- Stößel: 13
- Einrückwippe: 14
- Drehpunkt: 15
- Einrücklager: 16
- Ringfeder: 17
- Sperrelement: 18
- Wirkmittel: 19
- Wirkmittel: 20a, 20b
- Sicherungsring: 21
- Führungsnut: 22
- Verschleißausgleich: 23
- Elektromotor: 24
- Einrückwalze: 25
- Abtriebswelle: 26
- Nut: 27
- Stößel: 28
- Eingriffsmittel: 29
- Stößelaufnahmevorrichtung: 30
- Minima: 31
- Maxima: 32
- Schräge: 33
- Schräge: 34
- Drehrichtung: 35

## Patentansprüche

1. Drehmomentübertragungsvörrichtung für ein Kraftfahrzeug, welche wenigstens eine Kupplungseinrichtung (1) mit einer Kupplungsgehäuse, welche wenigstens eine Betätigungsvorrichtung (2), sowie wenigstens eine Antriebseinrichtung (3) aufweist, wobei die Betätigungsvorrichtung (2) zum Einrücken der Kupplungseinrichtung (1) mit der Antriebseinrichtung wirkverbunden ist und wobei die Kupplungseinrichtung mittels eines in der Betätigungsvorrichtung (2) vorgesehenen Arretiermechanismus im eingerücktem Zustand arretiert werden kann,
**dadurch gekennzeichnet,**
**dass** der Arretiermechanismus primärseitig und rotatorisch mit dem rotierenden Kupplungsgehäuse verbunden angeordnet ist und dass ein Einrücklager (16) der Betätigungsvorrichtung (2) im arretierten eingerückten Zustand der Kupplungseinrichtung (1) zumindest teilweise entlastet wird.

2. Drehmomentübertragungsvorrichtung nach Anspruch 1,
**dadurch gekennzeichnet,**
**dass** die Betätigungsvorrichtung (2) zumindest aus einem Einrückelement (9) und einem Sperrelement (18) besteht.

3. Drehmomentübertragungsvorrichtung nach Anspruch 1,
**dadurch gekennzeichnet,**
**dass** die Betätigungsvorrichtung (2) zumindest aus einem Einrückelement (9), einem Sperrelement (18), einem Einrückhebel (7) und einem Lager (16) besteht

4. Drehmomentübertragungsvorrichtung nach Anspruch 1,
**dadurch gekennzeichnet,**
**dass** zumindest ein Teil der Betätigungsvorrichtung (2) und/oder der Antriebseinrichtung (3) im arretierten Zustand entlastet werden kann.

5. Drehmomentübertragungsvorrichtung nach Anspruch 1,
**dadurch gekennzeichnet,**
**dass** die Kupplungseinrichtung (1) im arretierten Zustand im Haftreibungsbereich betrieben wird.

6. Drehmomentübertragungsvorrichtung nach Anspruch 1,
**dadurch gekennzeichnet,**
**dass** das Einrücklager (16) und eine Elektromaschine (24) der Antriebseinrichtung (3) im arretierten Zustand zumindest teilweise entlastet wird.

7. Drehmomentübertragungsvorrichtung nach Anspruch 2,
**dadurch gekennzeichnet,**
**dass** das Sperrelement (18) mit mindestens ersten Wirkmittel (19) versehen ist.

8. Drehmomentübertragungsvorrichtung nach Anspruch 2,
**dadurch gekennzeichnet,**
**dass** das Einrückelement (9) mit mindestens zweiten Wirkmitteln (20a, 20b) versehen ist, welche mit den ersten Wirkmitteln (19) in Wirkverbindung treten können.

9. Drehmomentübertragungsvorrichtung nach Anspruch 8,
**dadurch gekennzeichnet,**
**dass** die ersten und zweiten Wirkmittel (19, 20a, 20b) bei axialer Bewegung des Einrückelements (9) wechselwirken.

10. Drehmomentübertragungsvorrichtung nach Anspruch 8,
**dadurch gekennzeichnet,**
**dass** die ersten und zweiten Wirkmittel (19, 20a, 20b) bei axialer Bewegung des Einrückelements (9) innerhalb eines ersten Einrückweges nicht wechselwirken.

11. Drehmomentübertragungsvorrichtung nach Anspruch 8,
**dadurch gekennzeichnet,**
**dass** die ersten und zweiten Wirkmittel (19, 20a, 20b) bei axialer Bewegung des Einrückelements (9) innerhalb eines zweiten Einrückweges wechselwirken.

12. Drehmomentübertragungsvorrichtung nach Anspruch 11,
**dadurch gekennzeichnet,**
**dass** die Kupplungseinrichtung(1) innerhalb des zweiten Einrückweges im Haftreibungsbereich betrieben wird.

13. Drehmomentübertragungsvorrichtung nach Anspruch 9,
**dadurch gekennzeichnet,**
**dass** die ersten und zweiten Wirkmittel (19, 20a, 20b) derart wechselwirken, dass das Sperrelement (18) verdreht wird.

14. Drehmomentübertragungsvorrichtung nach Anspruch 11,
**dadurch gekennzeichnet,**
**dass** in Vorbereitung des Arretierens das Sperrelement (18) verdreht wird.

15. Drehmomentübertragungsvorrichtung nach Anspruch 11,
**dadurch gekennzeichnet,**
**dass** in Vorbereitung des Lösens der Arretierung das Sperrelement (18) weitergedreht wird.

16. Drehmomentübertragungsvorrichtung nach Anspruch 2,
**dadurch gekennzeichnet,**
**dass** das Sperrelement (18) als Ringteil ausgebildet ist.

17. Drehmomentübertragungsvorrichtung nach Anspruch 2,
**dadurch gekennzeichnet,**
**dass** das Einrückelement (9) aus einer Hülse besteht.

18. Drehmomentübertragungsvorrichtung nach Anspruch 7 und/oder 8,
**dadurch gekennzeichnet,**
**dass** die Wirkmittel (19, 20a, 20b) koaxial zur Längsachse des Einrückelements (9) und/oder des Sperrelements (18) angeordnet sind.

19. Drehmomentübertragungsvorrichtung nach Anspruch 18,
**dadurch gekennzeichnet,**
**dass** die Wirkmittel (19, 20a, 20b) als sich in axialer Richtung erstreckende Nuten ausgebildet sind, wobei mindestens erste Nuten benachbart zweiten Nuten angeordnet sind.

20. Drehmomentübertragungsvorrichtung nach Anspruch 19,
**dadurch gekennzeichnet,**
**dass** sich die ersten und zweiten Nuten durch ihre Länge unterscheiden und/oder das sich die ersten oder zweiten Nuten über die gesamte Länge des Sperrelements (18) erstrecken.

21. Drehmömentübertragungsvorrichtung nach Anspruch 18 und 19,
**dadurch gekennzeichnet,**
**dass** die Nuten an ihren Enden mit schrägen Wirkflächen ausgebildet sind.

22. Drehmomentübertragungsvorrichtung nach Anspruch 8,
**dadurch gekennzeichnet,**
**dass** die zweiten Wirkmittel (20a, 20b) sich auf der Außenseite der Einrückelements (9) befinden, sich in Längsrichtung erstrecken und aus gegenüberliegenden ersten und zweiten Keilen mit schrägen Wirkflächen (33,34) gebildet sind.

23. Drehmomentübertragungsvorrichtung nach Anspruch 8,
**dadurch gekennzeichnet,**
**dass** die der Kupplungseinrichtung (1) abgewandten Nuten und Keile des Arretiermechanismus bei axialer Bewegung des Einrückelements (9) in Einrückrichtung innerhalb des zweiten Einrückwegs mittels der schrägen Wirkflächen (33,34) der Nuten und Keile das Sperrelement (18) verdrehen.

24. Drehmomentübertragungsvorrichtung nach Anspruch 8,
**dadurch gekennzeichnet,**
**dass** die der Kupplungseinrichtung (1) zugewandten Nuten und Keile des Arretiermechanismus bei axialer Bewegung des Einrückelements (9) in Ausrückrichtung innerhalb des zweiten Ausrückwegs mittels der schrägen Wirkflächen (33,34) der Nuten und Keile das Sperrelement (18) verdrehen.

25. Drehmomentübertragungsvorrichtung nach Anspruch 8,
**dadurch gekennzeichnet,**
**dass** die der Kupplungseinrichtung (1) zugewandten Nuten und Keile des Arretiermechanismus bei axialer Bewegung des Einrückelements (9) in Ausrückrichtung innerhalb des zweiten Ausrückwegs mittels der schrägen Wirkflächen (33,34) der Nuten und Keile das Sperrelement (18) derart verdrehen, dass das Sperrelement (18) in eine Arretierstellung oder eine Freigabestellung verdreht wird.

26. Drehmomentübertragungsvorrichtung nach Anspruch 25,
**dadurch gekennzeichnet,**
**dass** sich bei axialer Verschiebung des Einrückelements (9) in Ausrückrichtung das Einrückelement (9) am Sperrelement (18) abstützt, wenn sich dieses in die Arretierstellung verdreht.

27. Verfahren zum Arretieren einer Drehmomentübertragungseinrichtung, bestehend aus wenigstens einer Kupplungseinrichtung (1), welche wenigstens eine Betätigungsvorrichtung (2) sowie wenigstens eine Antriebseinrichtung (3) aufweist,
**dadurch gekennzeichnet,**
**dass** die Betätigungsvorrichtung (2) der Kupplungseinrichtung (1) mittels der Antriebseinrichtung (3) derart betätigt wird, dass ein Einrückelement (9) durch axiales Verschieben ein Sperrelement (18) in eine Arretierposition verdreht und sich an diesem abstützt.

28. Verfahren zum Arretieren einer Drehmomentübertragungseinrichtung nach Anspruch 27,
**dadurch gekennzeichnet,**
**dass** durch Verschieben des Einrückelements (9) in Einrückrichtung das Sperrelement (18) um einen ersten Drehbereich verdreht wird und beim Verschieben in Ausrückrichtung um einen zweiten Drehbereich verdreht wird.

29. Verfahren zum Arretieren einer Drehmomentübertragungseinrichtung nach Anspruch 27,
**dadurch gekennzeichnet,**
**dass** das Sperrelement (18) abwechselnd in eine Arretierposition und eine Nichtarretierposition gedreht wird.

30. Verfahren zum Arretieren einer Drehmomentübertragungseinrichtung nach Anspruch 29,
**dadurch gekennzeichnet,**
**dass** zum Ausrücken der arretierten Drehmomentübertragungseinrichtung das Einrückelement (9) zuerst in Richtung Einrücken verschoben wird, um das Sperrelement (18) um einen ersten Drehbereich zu verdrehen.

31. Verfahren zum Arretieren einer Drehmomentübertragungseinrichtung nach **Anspruch 28,**
**dadurch gekennzeichnet,**
**dass** die Antriebseinrichtung (3) in einem ersten Betriebszustand betrieben wird.

32. Verfahren zum Arretieren einer Drehmomentübertragungseinrichtung nach Anspruch 30,
**dadurch gekennzeichnet,**
**dass** zum Ausrücken der arretierten Drehmomentübertragungseinrichtung die Antriebseinrichtung (3) in einem zweiten Betriebszustand betrieben wird.

33. Verfahren zum Arretieren einer Drehmomentübertragungseinrichtung nach Anspruch 31 und 32,
**dadurch gekennzeichnet,**
**dass** die Antriebseinrichtung (3) mit einer Elektromaschine (24) versehen ist, und dass erste und zweite Betriebszustände der Elektromaschine (24) durch verschiedene Drehrichtungen (35) **gekennzeichnet** sind.

34. Verfahren zum Arretieren einer Drehmomentübertragungseinrichtung nach Anspruch 28,
**dadurch gekennzeichnet,**
**dass** die Betätigungseinrichtung (2) in einem ersten Betriebszustand der Antriebseinrichtung (3) einen Totpunkt durchfährt und dass das Einrückelement (9) seine Bewegungsrichtung umkehrt.

35. Verfahren zum Arretieren einer Drehmomentübertragungseinrichtung nach Anspruch 30,
**dadurch gekennzeichnet,**
**dass** die Betätigungseinrichtung (2) in einem zweiten Betriebszustand der Antriebseinrichtung (3) einen Totpunkt durchfährt und dass das Einrückelement (9) seine Bewegungsrichtung umkehrt.

## Claims

1. Torque transmission apparatus for a motor vehicle, which has at least one clutch device (1) which has a clutch housing, at least one actuating apparatus (2) and at least one drive device (3), the actuating apparatus (2) for engaging the clutch device (1) being operatively connected to the drive device and it being possible for the clutch device to be locked in the engaged state by means of a locking mechanism which is provided in the actuating apparatus (2), **characterized in that** the locking mechanism is arranged on the primary side so as to rotate, in a manner which is connected to the rotating clutch housing, and **in that** an engagement bearing (16) of the actuating apparatus (2) is relieved at least partially in the locked, engaged state of the clutch device (1).

2. Torque transmission apparatus according to Claim 1, **characterized in that** the actuating apparatus (2) comprises at least one engagement element (9) and one locking element (18).

3. Torque transmission apparatus according to Claim 1, **characterized in that** the actuating apparatus (2) comprises at least one engagement element (9), a locking element (18), an engagement lever (7) and a bearing (16).

4. Torque transmission apparatus according to Claim 1, **characterized in that** at least one part of the actuating apparatus (2) and/or the drive device (3) can be relieved in the locked state.

5. Torque transmission apparatus according to Claim 1, **characterized in that** the clutch device (1) is operated in the adhesion friction region in the locked state.

6. Torque transmission apparatus according to Claim 1, **characterized in that** the engagement bearing (16) and an electric machine (24) of the drive device (3) are relieved at least partially in the locked state.

7. Torque transmission apparatus according to Claim 2, **characterized in that** the locking element (18) is provided with at least first active means (19).

8. Torque transmission apparatus according to Claim 2, **characterized in that** the engagement element (9) is provided with at least second active means (20a, 20b) which can be operatively connected to the first active means (19).

9. Torque transmission apparatus according to Claim 8, **characterized in that** the first and second active means (19, 20a, 20b) interact in the event of an axial movement of the engagement element (9).

10. Torque transmission apparatus according to Claim 8, **characterized in that** the first and second active means (19, 20a, 20b) do not interact in the event of an axial movement of the engagement element (9) within a first engagement path.

11. Torque transmission apparatus according to Claim 8, **characterized in that** the first and second active means (19, 20a, 20b) interact in the event of an axial movement of the engagement element (9) within a second engagement path.

12. Torque transmission apparatus according to Claim 11, **characterized in that** the clutch device (1) is operated in the adhesion friction region within the second engagement path.

13. Torque transmission apparatus according to Claim 9, **characterized in that** the first and second active means (19, 20a, 20b) interact in such a way that the locking element (18) is rotated.

14. Torque transmission apparatus according to Claim 11, **characterized in that** the locking element (18) is rotated in preparation for the locking.

15. Torque transmission apparatus according to Claim 11, **characterized in that** the locking element (18) is rotated further in preparation for the locking being released.

16. Torque transmission apparatus according to Claim 2, **characterized in that** the locking element (18) is configured as a ring part.

17. Torque transmission apparatus according to Claim 2, **characterized in that** the engagement element (9) comprises a sleeve.

18. Torque transmission apparatus according to Claim 7 and/or 8, **characterized in that** the active means (19, 20a, 20b) are arranged coaxially with respect to the longitudinal axis of the engagement element (9) and/or the locking element (18).

19. Torque transmission apparatus according to Claim 18, **characterized in that** the active means (19, 20a, 20b) are configured as grooves which extend in the axial direction, at least first grooves being arranged in a manner which is adjacent to second grooves.

20. Torque transmission apparatus according to Claim 19, **characterized in that** the first and second grooves differ in terms of their length, and/or **in that** the first or second grooves extend over the entire length of the locking element (18).

21. Torque transmission apparatus according to Claims 18 and 19, **characterized in that** the grooves are formed with oblique active faces at their ends.

22. Torque transmission apparatus according to Claim 8, **characterized in that** the second active means (20a, 20b) are situated on the outer side of the engagement element (9), extend in the longitudinal direction and are formed from first and second wedges which lie opposite one another and have oblique active faces (33, 34).

23. Torque transmission apparatus according to Claim 8, **characterized in that** the grooves and wedges of the locking mechanism which face away from the clutch device (1) rotate the locking element (18) in the event of an axial movement of the engagement element (9) in the engagement direction within the second engagement path by means of the oblique active faces (33, 34) of the grooves and wedges.

24. Torque transmission apparatus according to Claim 8, **characterized in that** the grooves and wedges of the locking mechanism which face the clutch device (1) rotate the locking element (18) in the event of an axial movement of the engagement element (9) in the disengagement direction within the second disengagement path by means of the oblique active faces (33, 34) of the grooves and wedges.

25. Torque transmission apparatus according to Claim 8, **characterized in that** the grooves and wedges of the locking mechanism which face the clutch device (1) rotate the locking element (18) in the event of an axial movement of the engagement element (9) in the disengagement direction within the second disengagement path by means of the oblique active faces (33, 34) of the grooves and wedges, in such a way that the locking element (18) is rotated into a locking position or a released position.

26. Torque transmission apparatus according to Claim 25, **characterized in that**, in the event of an axial displacement of the engagement element (9) in the disengagement direction, the engagement element (9) is supported on the locking element (18) if the latter is rotated into the locking position.

27. Method for locking a torque transmission device, comprising at least one clutch device (1) which has at least one actuating apparatus (2) and at least one drive device (3), **characterized in that** the actuating apparatus (2) of the clutch device (1) is actuated by means of the drive device (3) in such a way that an engagement element (9) rotates a locking element (18) into a locking position by axial displacement and is supported on the latter.

28. Method for locking a torque transmission device according to Claim 27, **characterized in that** the locking element (18) is rotated about a first rotational region by displacement of the engagement element (9) in the engagement direction, and is rotated about a second rotational region during displacement in the disengagement direction.

29. Method for locking a torque transmission device according to Claim 27, **characterized in that** the locking element (18) is rotated alternately into a locking position and a non-locking position.

30. Method for locking a torque transmission device according to Claim 29, **characterized in that**, for the purpose of disengaging the locked torque transmission device, the engagement element (9) is first displaced in the direction of engagement, in order to rotate the locking element (18) about a first rotational region.

31. Method for locking a torque transmission device according to Claim 28, **characterized in that** the drive device (3) is operated in a first operating state.

32. Method for locking a torque transmission device according to Claim 30, **characterized in that** the drive device (3) is operated in a second operating state for the purpose of disengaging the locked torque transmission device.

33. Method for locking a torque transmission device according to Claims 31 and 32, **characterized in that** the drive device (3) is provided with an electric machine (24), and **in that** first and second operating states of the electric machine (24) are **characterized by** different rotational directions (35).

34. Method for locking a torque transmission device according to Claim 28, **characterized in that** the actuating device (2) passes through a dead centre in a first operating state of the drive device (3), and **in that** the engagement element (9) reverses its direction of movement.

35. Method for locking a torque transmission device according to Claim 30, **characterized in that** the actuating device (2) passes through a dead centre in a second operating state of the drive device (3), and **in that** the engagement element (9) reverses its direction of movement.

## Revendications

1. Dispositif de transfert de couple pour un véhicule automobile, qui présente au moins un dispositif d'embrayage (1) avec un carter d'embrayage qui présente au moins un dispositif d'actionnement (2) ainsi qu'au moins un dispositif d'entraînement (3), le dispositif d'actionnement (2) étant connecté fonctionnellement au dispositif d'entraînement pour l'embrayage du dispositif d'embrayage (1) et le dispositif d'embrayage pouvant être bloqué dans l'état embrayé au moyen d'un mécanisme de blocage prévu dans le dispositif d'actionnement (2),
**caractérisé en ce que**
le mécanisme de blocage est disposé du côté primaire et connecté à rotation au carter d'embrayage rotatif, et **en ce qu'**un palier d'embrayage (16) du dispositif d'actionnement (2) est au moins partiellement détendu dans l'état embrayé bloqué du dispositif d'embrayage (1).

2. Dispositif de transfert de couple selon la revendication 1,
**caractérisé en ce que**
le dispositif d'actionnement (2) se compose au moins d'un élément d'embrayage (9) et d'un élément de blocage (18).

3. Dispositif de transfert de couple selon la revendication 1,
**caractérisé en ce que**
le dispositif d'actionnement (2) se compose au moins d'un élément d'embrayage (9), d'un élément de blocage (18), d'un levier d'embrayage (7) et d'un palier (16).

4. Dispositif de transfert de couple selon la revendication 1,
**caractérisé en ce qu'**
au moins une partie du dispositif d'actionnement (2) et/ou du dispositif d'entraînement (3) peut être détendue dans l'état bloqué.

5. Dispositif de transfert de couple selon la revendication 1,
**caractérisé en ce que**
le dispositif d'embrayage (1) fonctionne dans la plage d'adhérence par friction dans l'état bloqué.

6. Dispositif de transfert de couple selon la revendication 1,
**caractérisé en ce que**
le palier d'embrayage (16) et une machine électrique (24) du dispositif d'entraînement (3) sont au moins partiellement détendus dans l'état bloqué.

7. Dispositif de transfert de couple selon la revendication 2,
**caractérisé en ce que**
l'élément de blocage (18) est pourvu d'au moins un premier moyen fonctionnel (19).

8. Dispositif de transfert de couple selon la revendication 2,
**caractérisé en ce que**
l'élément d'embrayage (9) est pourvu d'au moins des deuxièmes moyens fonctionnels (20a, 20b) qui peuvent entrer en liaison coopérante avec les premiers moyens fonctionnels (19).

9. Dispositif de transfert de couple selon la revendication 8,
**caractérisé en ce que**
les premiers et deuxièmes moyens fonctionnels (19, 20a, 20b) interagissent dans le cas d'un mouvement axial du dispositif d'embrayage (9).

10. Dispositif de transfert de couple selon la revendication 8,
**caractérisé en ce que**
les premiers et deuxièmes moyens fonctionnels (19, 20a, 20b) n'interagissent pas à l'intérieur d'une première course d'embrayage dans le cas d'un mouvement axial du dispositif d'embrayage (9).

11. Dispositif de transfert de couple selon la revendication 8,
**caractérisé en ce que**
les premiers et deuxièmes moyens fonctionnels (19, 20a, 20b) interagissent à l'intérieur d'une deuxième course d'embrayage dans le cas d'un mouvement axial du dispositif d'embrayage (9).

12. Dispositif de transfert de couple selon la revendication 11,
**caractérisé en ce que**
le dispositif d'embrayage (1) fonctionne à l'intérieur de la deuxième course d'embrayage dans la plage d'adhérence par friction.

13. Dispositif de transfert de couple selon la revendication 9,
**caractérisé en ce que**
les premiers et deuxièmes moyens fonctionnels (19, 20a, 20b) interagissent de telle sorte que l'élément de blocage (18) soit tourné.

14. Dispositif de transfert de couple selon la revendication 11,
**caractérisé en ce que**
l'élément de blocage (18) est tourné en préparation du blocage.

15. Dispositif de transfert de couple selon la revendication 11,
**caractérisé en ce que**
l'élément de blocage (18) est tourné davantage en préparation du desserrage du blocage.

16. Dispositif de transfert de couple selon la revendication 2,
**caractérisé en ce que**
l'élément de blocage (18) est réalisé sous forme de pièce annulaire.

17. Dispositif de transfert de couple selon la revendication 2,
**caractérisé en ce que**
l'élément d'embrayage (9) se compose d'une douille.

18. Dispositif de transfert de couple selon la revendication 7 et/ou 8,
**caractérisé en ce que**
les moyens fonctionnels (19, 20a, 20b) sont disposés coaxialement à l'axe longitudinal de l'élément d'embrayage (9) et/ou de l'élément de blocage (18).

19. Dispositif de transfert de couple selon la revendication 18,
**caractérisé en ce que**
les moyens fonctionnels (19, 20a, 20b) sont réalisés sous forme de rainures s'étendant dans la direction axiale, au moins des premières rainures étant disposées à côté de deuxièmes rainures.

20. Dispositif de transfert de couple selon la revendication 19,
**caractérisé en ce que**
les premières et les deuxièmes rainures se différencient par leur longueur et/ou les premières ou les deuxièmes rainures s'étendent sur toute la longueur de l'élément de blocage (18).

21. Dispositif de transfert de couple selon la revendication selon la revendication 18 et 19,
**caractérisé en ce que**
les rainures sont réalisées à leurs extrémités avec des surfaces fonctionnelles obliques.

22. Dispositif de transfert de couple selon la revendication selon la revendication 8,
**caractérisé en ce que**
les deuxièmes moyens fonctionnels (20a, 20b) se trouvent du côté extérieur de l'élément d'embrayage (9), s'étendent dans la direction longitudinale et sont formés de premières et deuxièmes clavettes opposées ayant des faces fonctionnelles obliques (33, 34).

23. Dispositif de transfert de couple selon la revendication selon la revendication 8,
**caractérisé en ce que**
les rainures et les clavettes du mécanisme de blocage opposées au dispositif d'embrayage (1) font tourner l'élément de blocage (18) dans la direction d'embrayage à l'intérieur de la deuxième course d'embrayage au moyen des faces fonctionnelles obliques (33, 34) des rainures et des clavettes dans le cas d'un mouvement axial de l'élément d'embrayage (9).

24. Dispositif de transfert de couple selon la revendication 8,
**caractérisé en ce que**
les rainures et les clavettes du mécanisme de blocage tournées vers le dispositif d'embrayage (1) font tourner l'élément de blocage (18) dans la direction de débrayage à l'intérieur de la deuxième course de débrayage au moyen des faces fonctionnelles obliques (33, 34) des rainures et des clavettes dans le cas d'un mouvement axial de l'élément d'embrayage (9).

25. Dispositif de transfert de couple selon la revendication 8,
**caractérisé en ce que**
les rainures et les clavettes du mécanisme de blocage tournées vers le dispositif d'embrayage (1) font tourner l'élément de blocage (18) dans la direction de débrayage à l'intérieur de la deuxième course de débrayage au moyen des faces fonctionnelles obliques (33, 34) des rainures et des clavettes dans le cas d'un mouvement axial de l'élément d'embrayage (9) de telle sorte que l'élément de blocage (18) soit tourné dans une position de blocage ou une position de libération.

26. Dispositif de transfert de couple selon la revendication 25,
**caractérisé en ce que**
l'élément d'embrayage (9) s'appuie sur l'élément de blocage (18) dans le cas d'un déplacement axial de l'élément d'embrayage (9) dans la direction de débrayage, lorsque l'élément de blocage tourne dans la position de blocage.

27. Procédé pour bloquer un dispositif de transfert de couple se composant d'au moins un dispositif d'embrayage (1) qui présente au moins un dispositif d'actionnement (2) et au moins un dispositif d'entraînement (3),
**caractérisé en ce que**
le dispositif d'actionnement (2) du dispositif d'embrayage (1) est actionné au moyen du dispositif d'entraînement (3) de telle sorte qu'un élément d'embrayage (9) fasse tourner par déplacement axial un élément de blocage (18) dans une position de blocage et s'appuie sur celui-ci.

28. Procédé pour bloquer un dispositif de transfert de couple selon la revendication 27,
**caractérisé en ce que**
par le déplacement de l'élément d'embrayage (9) dans la direction d'embrayage l'élément de blocage (18) est tourné d'une première plage de rotation et lors du déplacement dans la direction de débrayage, il est tourné d'une deuxième plage de rotation.

29. Procédé pour bloquer un dispositif de transfert de couple selon la revendication 27,
**caractérisé en ce que**
l'élément de blocage (18) est tourné en alternance dans une position de blocage et dans une position de non blocage.

30. Procédé pour bloquer un dispositif de transfert de couple selon la revendication 29,
**caractérisé en ce que**
pour le débrayage du dispositif de transfert de couple bloqué, l'élément d'embrayage (9) est d'abord déplacé dans la direction de l'embrayage pour faire tourner l'élément de blocage (18) d'une première plage de rotation.

31. Procédé pour bloquer un dispositif de transfert de couple selon la revendication 28,
**caractérisé en ce que**
le dispositif d'entraînement (3) fonctionne dans un premier étant de fonctionnement.

32. Procédé pour bloquer un dispositif de transfert de couple selon la revendication 30,
**caractérisé en ce que**
pour le débrayage du dispositif de transfert de couple bloqué, le dispositif d'entraînement (3) fonctionne dans un deuxième état de fonctionnement.

33. Procédé pour bloquer un dispositif de transfert de couple selon la revendication 31 et la revendication 32,
**caractérisé en ce que**
le dispositif d'entraînement (3) est pourvu d'une machine électrique (24) et **en ce que** des premier et deuxième états de fonctionnement de la machine électrique (24) sont **caractérisé par** des sens de rotation différents (35) .

34. Procédé pour bloquer un dispositif de transfert de couple selon la revendication 28,
**caractérisé en ce que**
le dispositif d'actionnement (2) passe par un point mort dans un premier état de fonctionnement du dispositif d'entraînement (3) et **en ce que** l'élément d'embrayage (9) inverse son sens de déplacement.

35. Procédé pour bloquer un dispositif de transfert de couple selon la revendication 30,
**caractérisé en ce que**
le dispositif d'actionnement (2) passe par un point mort dans un deuxième état de fonctionnement du dispositif d'entraînement (3) et **en ce que** l'élément d' embrayage (9) inverse son sens de déplacement.
